# EUROPEAN PATENT APPLICATION

(11) **EP 1 635 462 A1**
(43) Date of publication of application: **15.03.2006**
(21) Application number: 04255521.9
(22) Date of filing: 13.09.2004
(51) Int. Cl.: H03K 17/0814, H02M 3/335

(54) **High efficiency switching power converter**

(71) Applicant: Hutchins, Peter Laurence, Maidenhead, Berkshire SL6 6SD (GB)
(72) Inventor: Hutchins, Peter Laurence, Maidenhead, Berkshire SL6 6SD (GB)
(74) Representative: Hardwick, John Frederick

(57) **Abstract**

A high efficiency switching power converter comprises a flyback converter and a scavenger circuit to recycle the unavailable magnetic energy stored in the converter wiring and core leakage flux. Recycling this energy, which is normally dissipated in snubber networks, improves efficiency and considerably extends the feasible power levels of the flyback topology enabling high power output, low cost offline converters with low line current harmonics and active PFC.

## Description

The invention relates to electronic switching offline power converters.

There is a global requirement for lower cost and more efficient electrical power converter design with active power factor correction.

With the advent of regulations controlling Power Factor and line current harmonic levels of power converters connected to the AC mains supply, many higher power designs must include an additional active PFC correction stage at the front end, adding cost and further reducing the efficiency of the resulting multistage converter.

A single stage offline flyback converter with PFC modulation can be devised however a significant amount of energy is unavoidably stored in stray circuit inductance both in the transformer and other high current conductors. This energy is not flux linked to the transformer secondary side output circuits, and if not controlled in some manner, causes destructive transient conditions on power supply components during their off condition. To protect semiconductor components this energy is normally captured by "snubber" networks, which limit the amplitude of voltage transients to safe levels. This energy is intentionally dissipated as heat and wasted, reducing the overall conversion efficiency and incurring consequential costs in both manufacturing and use.

A cost effective solution to improve the overall efficiency of such power converters is described in which the power normally wasted in snubbers is scavenged and recycled by circuitry which delivers the majority of this energy to the secondary side load circuit. This is especially useful in high power, offline flyback converters where the high percentage of energy wasted in such snubber circuits places an effective practical limit on the maximum power ratings of the flyback topology. The invention is capable of multi-kilowatt power levels with high efficiency and low manufacturing costs.

According to the present invention there is provided a flyback type switching power supply topology providing regulated outputs with galvanic isolation from AC input.

The present invention consists in a switching power supply operative to generate primary energy in a power transformer having primary winding driven from a main semiconductor switch and a secondary winding coupled to provide rectified output power and a scavenger circuit operative to capture energy from transient waveforms on the primary winding of said power transformer, said scavenger circuit comprising: an auxiliary semiconductor switch coupled to conduct said transient energy to a primary winding of an auxiliary transformer, and a rectifier, coupled to transfer said captured energy from a secondary winding of said auxiliary transformer as an addition to the rectified output from the secondary winding of the power transformer.

A scavenger circuit comprising a rectifier and capacitor is used to store the excess energy and limit the consequential voltage rise on the main converter switch. An auxiliary semiconductor switching element driving a feedforward transformer/rectifier combination transferring said scavenged energy to the PSU secondary side output circuit.

The voltage imposed on the scavenger capacitor is the sum of the instantaneous AC input voltage, the primary side flyback voltage plus the voltage rise due to scavenged energy. The voltage imposed on the scavenger transformer primary during the scavenger switch on-time is the difference between scavenger capacitor voltage minus instantaneous AC input voltage (this is equal to the sum of the primary side flyback voltage plus the voltage rise due to excess energy). The turns ratio of the scavenger transformer is arranged such that the scavenger secondary side rectifiers will become forward biased only with the voltage contribution of the scavenged energy and not with primary side flyback voltage alone. Significant current will then flow into the secondary side circuit only as a result of scavenged energy. This current flow reduces the voltage on the scavenger capacitor and consequently limits the peak transient voltage stress on the primary switch to within safe limits.

The scavenger semiconductor switch may preferably be controlled by a winding on the main converter transformer or by the main Pulse Width Modulation chip, a separate controller circuit, or any combination of such.

A flyback converter PSU topology is shown which comprises input rectification and filtering, PWM control circuitry, semiconductor switch, power transformer, secondary side rectifiers and output reservoir capacitors. It has an additional scavenger circuit comprising a transient capture circuit, an auxiliary semiconductor switch which is preferably driven from the main conversion transformer, an additional transformer and rectifier to transfer the recovered energy to the PSU output.

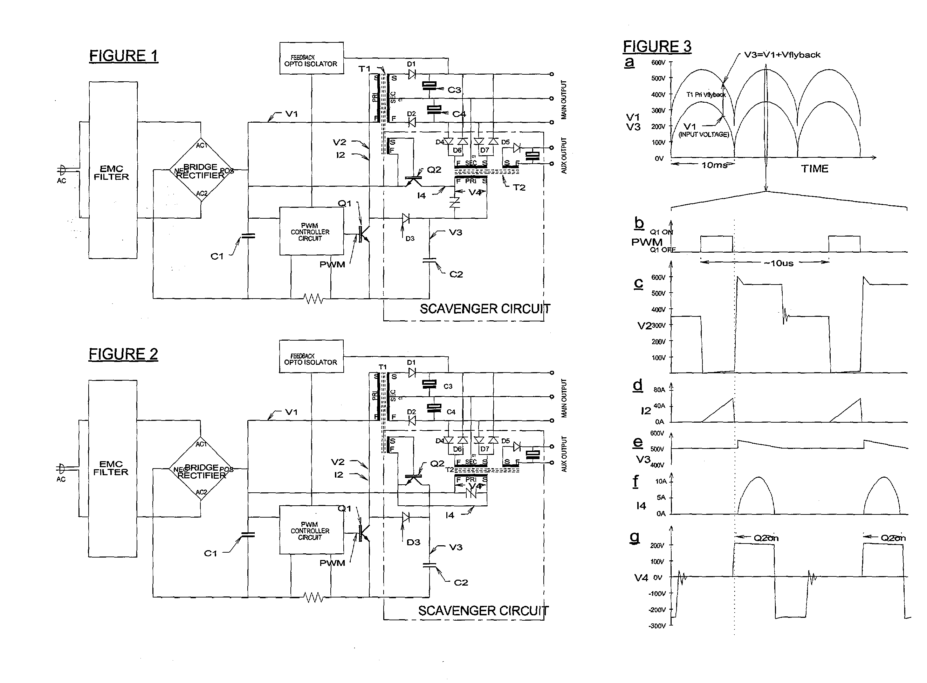

A specific embodiment of the invention will now be described by way of example with reference to the accompanying drawing in which:
Figure (1) shows the block schematic for a typical embodiment of the invention.
Figure (2) shows the block schematic with alternative series connection of Q2 and T2.
   And
Figure (3) shows typical waveforms for the basic circuit shown in Figure 1).

Referring to Figure 1 it can be seen that a flyback converter stage is augmented with an efficiency boosting scavenger circuit comprising D3, C2, Q2, T2 and D4 thru D7.
With reference to Figure 3a the peak voltage acquired across C2 is the sum of [instantaneous rectified AC input voltage + T1 primary flyback voltage + voltage rise due to energy stored in stray inductance of T1 Primary]. Figures 3b, 3c and 3d show Q1 switching waveforms in expanded timebase and is typical of flyback operation in discontinuous mode. Figure 3e shows the energy capturing action of D3 and C2, arranged also to prevent excessive voltage transients on Q1 due to T1 primary winding leakage inductance, current limiting is inherent in T1 flyback mode, so peak currents in Q2 and T2 are controlled to safe values.

Figures 3g and 3f show T2 primary current and voltage waveforms during scavenged energy transfer. Q2 is driven from a winding on T1 shown here with Q2 in ON-state during T1 flyback period, although this may also be connected in reverse phase.
This places a voltage of [T1 primary flyback voltage + voltage rise due to energy stored in stray inductance of T1 Primary] across T2 primary winding. If the voltage on C2 is greater than T1 primary flyback voltage then energy transfer takes place as follows;
The turns ratio of T1 is arranged for correct PSU output voltage, T2 turns ratio is further arranged such that scavenger rectifiers D4 and D5 are only conducting due to excess voltage on C2 from captured stray inductance energy of T1 primary (ie. When C2 has discharged to a voltage equal to T1 primary flyback voltage then D4 and D5 will have ceased to conduct).

Thus energy stored in T1 leakage inductance is captured by D3 and C2 and transferred to the PSU output via Q2, T2, D4 and D5.
At the point when Q2 switches off there is a relatively small amount of energy stored in T2 due to magnetising current and this is transferred to the load via D6 and D7. The small amount of energy stored in T2 primary winding leakage inductance is dissipated in the transient protection diode connected across T2 primary and protects Q2 from excessive voltage transients.

The synchronous switching nature of Q1 and Q2 in the preferred embodiment minimises the scavenger capacitor value required and minimises the amount of additional Radio Frequency Interference generated, mutual interference between switching stages is also minimised.

Scavenging currents do not affect the AC input PFC/harmonics figures for the converter.

## Claims

1. A switching power supply operative to generate primary energy in a power transformer having primary winding driven from a main semiconductor switch and a secondary winding coupled to provide rectified output power and a scavenger circuit operative to capture energy from transient waveforms on the primary winding of said power transformer, said scavenger circuit comprising: an auxiliary semiconductor switch coupled to conduct said transient energy to a primary winding of an auxiliary transformer, and a rectifier, coupled to transfer said captured energy from a secondary winding of said auxiliary transformer as an addition to the rectified output from the secondary winding of the power transformer.

2. A switching power supply, according to claim 1, where the power transformer comprises a switching winding and wherein said switching winding is coupled to control switching of the auxiliary semiconductor switch.

3. A switching power supply, according to claim 2,. wherein the switching of the auxiliary semiconductor switch is in any selectable phase relationship with the switching of the main semiconductor switch.

4. A switching power supply, according to claim 1, comprising a main pulse width modulation circuit for controlling switching of the main semiconductor switch, said main pulse width modulator circuit being coupled to control switching of the auxiliary semiconductor switch.

5. A switching power supply, according to claim 4,. wherein the switching of the auxiliary semiconductor switch is in any selectable phase relationship with the switching of the main semiconductor switch.

6. A switching power supply, according to claim 1, comprising an auxiliary pulse width modulation circuit, coupled to control switching of the auxiliary semiconductor switch.

7. A switching power supply, according to claim 6,. wherein the switching of the auxiliary semiconductor switch is in any selectable phase relationship with the switching of the main semiconductor switch.

8. A switching power supply, according to claim 6 or 7, comprising a main pulse width modulation circuit for controlling switching of the main semiconductor switch.

9. A switching power supply, according to claim any one of claims 4, 5 or 8 ,driven from an AC supply input, wherein said main pulse width modulation circuit is operative to provide modulation to effect power factor correction on the supply current of said AC supply input.

10. A switching power supply, according to any one of the preceding claims, wherein the switching power supply is a flyback switching power supply.

11. A switching power supply, according to any one of claims 1 to 9, wherein the switching power supply is a feed forward switching power supply.

12. A switching power supply, according to any one of claims 1 to 9, wherein the switching power supply is a half bridge switching power supply.

13. A switching power supply, according to any one of claims 1 to 9, wherein the switching power supply is a full bridge switching power supply.

14. A switching power supply, according to any one of the preceding claims, wherein said auxiliary transformer comprises an auxiliary output winding for providing an auxiliary power output, separate from said rectified output power provided by said secondary winding on said power transformer.
